# EUROPÄISCHE PATENTANMELDUNG

(11) **EP 3 457 233 A1**
(43) Veröffentlichungstag der Anmeldung: **20.03.2019**
(21) Anmeldenummer: 17191098.7
(22) Anmeldetag: 14.09.2017
(51) Int. Cl.: G05B 19/042, G06F 9/445

(54) **BROADCASTVORRICHTUNG ZUM ÜBERTRAGEN VON FIRMWARE-DATEN UND/ODER KONFIGURATIONSDATEN**

(71) Anmelder: VEGA Grieshaber KG, 77709 Wolfach (DE)
(72) Erfinder: MARX, Christian, 77793 Gutach (DE)
(74) Vertreter: Maiwald Patent- und Rechtsanwaltsgesellschaft mbH

(57) **Zusammenfassung**

Broadcastvorrichtung zum Ubertragen von Firmware-Daten und/oder Konfigurationsdaten, wobei die Broadcastvorrichtung (100) umfasst: eine Konfigurationseinrichtung (10), welche dazu ausgebildet ist, die zu übertragenden Firmware-Daten und/oder Konfigurationsdaten bereitzustellen; und eine Sendeeinrichtung (20), welche dazu ausgebildet ist, die bereitgestellten Firmware-Daten und/oder Konfigurationsdaten an ein Füllstandmessgerät (200) zu übertragen.

## Beschreibung

### Gebiet der Erfindung

Die Erfindung betrifft Firmware- und Konfigurationsdatenübertragung für Füllstandmessgeräte. Insbesondere betrifft die Erfindung eine Broadcastvorrichtung zum Übertragen von Firmware-Daten und/oder Konfigurationsdaten, ein oder mehrere Füllstandmessgeräte, ein Verfahren zum Übertragen von Firmware-Daten, und eine Datenstruktur für die Datenübertragung für Füllstandmessgeräte.

### Hintergrund

Bluetooth-Advertising erlaubt Broadcasting von Daten ohne Verbindungsaufnahme, wird jedoch üblicherweise nur zur Identifikation des Bluetooth-Geräts verwendet.

Die EP 3 008 530 A1 beschreibt ein Verfahren zum Parametrieren eines Feldgerätes der Automatisierungstechnik mittels eines Bediengerätes, wobei das Feldgerät zumindest eine Batterie, ein Funkmodul und einen nicht-flüchtigen-Speicher umfasst.

Die DE 10 2009 047 538 A1 beschreibt ein Verfahren zur Optimierung der Parametereinstellung von mindestens einem Energieversorgungs-Parameter eines Feldgerät-Stromversorgungsmoduls. Das Feldgerät-Stromversorgungsmodul ist dabei ausschließlich an einem Feldgerät angeschlossen. Das angeschlossene Feldgerät wird durch das Feldgerät-Stromversorgungsmodul mit elektrischer Energie versorgt.

### Zusammenfassung der Erfindung

Es ist eine Aufgabe der Erfindung, eine Broadcastvorrichtung anzugeben, welche eine möglichst schnelle und fehlerfreie Firmware- oder Konfigurationsdatenübertragung für Füllstandmessgeräte darstellen kann.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft eine Broadcastvorrichtung zum Übertragen von Firmware-Daten und/oder Konfigurationsdaten, wobei die Broadcastvorrichtung umfasst: eine Konfigurationseinrichtung, welche dazu ausgebildet ist, die zu übertragenden Firmware-Daten und/oder Konfigurationsdaten bereitzustellen; und eine Sendeeinrichtung, welche dazu ausgebildet ist, die bereitgestellten Firmware-Daten und/oder Konfigurationsdaten an ein Füllstandmessgerät zu übertragen.

Die vorliegende Erfindung ermöglicht vorteilhaft, dass ein Verfahren bereitgestellt wird, durch welches Füllstandmessgeräte durch einen zentralen Sender, als Broadcaster, gleichzeitig Daten über mobile Technologien erhalten können, wobei die Daten für spätere Verwendung oder Installation von jedem Füllstandmessgerät in einem internen Zwischenspeicher abgelegt werden können.

Die Broadcastvorrichtung, auch als Multicastvorrichtung bezeichnet, ermöglicht Broadcast bzw. Multicast in der Form einer Nachrichtenübertragung von einem Punkt zu einer Gruppe, mit anderen Worten ausgedrückt, die Broadcastvorrichtung ist dazu ausgebildet, eine Mehrpunktverbindung bereitzustellen zu einer Vielzahl von Füllstandmessgeräten.

Die vorliegende Erfindung ermöglicht vorteilhaft, dass ein gleichzeitiges Senden von Daten an mehrere Empfänger erreicht wird, sodass Übertragungszeit eingespart wird.

Die vorliegende Erfindung ermöglicht vorteilhaft eine konfigurationslose Kommunikation zwischen Broadcaster und Füllstandmessgerät, das Füllstandmessgerät muss den Broadcaster nicht kennen. Ferner kann eine automatische Fortsetzung des Empfangs bei Eintritt in den Sendebereich und automatisches Beenden des Empfangs bei Austritt aus dem Sendebereich bewerkstelligt werden, d.h. es ist kein Eingriff durch den Anwender notwendig.

Gemäß einer Ausführungsform der Erfindung ist vorgesehen, dass die Konfigurationseinrichtung ferner dazu ausgebildet ist, Metadaten in Bezug auf die zu übertragenden Firmware-Daten und/oder Konfigurationsdaten bereitzustellen und dass die Sendeeinrichtung dazu ausgebildet ist, die i) Metadaten und ii) die Firmware-Daten und/oder die Konfigurationsdaten in einer Sequenz von Datenpaketen zu übertragen. Hierdurch wird es ermöglicht, mit Metadaten die übertragenen Firmware-Daten und/oder Konfigurationsdaten zu spezifizieren.

Gemäß einer Ausführungsform der Erfindung ist vorgesehen, dass die Konfigurationseinrichtung ferner dazu ausgebildet ist, durch die bereitgestellten Metadaten die übertragenen Firmware-Daten und/oder die übertragenen Konfigurationsdaten:
i) einem Typ von Füllstandmessgeräten; oder
ii) einer Version einer Firmware für Füllstandmessgeräte; oder
iii) einem Datenübertragungsverlauf der Broadcastvorrichtung
zu zuordnen.

Es kann vorgesehen sein, dass die Sendeeinrichtung dazu ausgebildet ist, ferner:
i) einen Paketzähler; und/oder
ii) eine Prüfsumme; und/oder
iii) ein digitales Zertifikat; und/oder
iv) Daten zur Prüfung einer Authentizität der Broadcastvorrichtung
zu übertragen. Als Paketzähler oder Prüfsumme werden beispielsweise zyklische Redundanzprüfung, auf Englisch "cyclic redundancy check", CRC, als Verfahren zur Bestimmung eines Prüfwerts für Daten verwendent, um Fehler bei der Übertragung oder Speicherung erkennen zu können

Gemäß einer Ausführungsform der Erfindung ist die Sendeeinrichtung dazu ausgebildet, die i) Metadaten und ii) die Firmware-Daten und/oder die Konfigurationsdaten per:
i) lokalem Funknetz; und/oder
ii) Wireless Personal Area Network (WPAN); und/oder
iii) Wireless Local Area Network (WLAN); und/oder
iv) Bluetooth; und/oder
v) WirelessHart; und/oder
vi) Long Range Wide Area Network (LoRaWAN); und/oder
iv) Wifibroadcast
zu übertragen.

Gemäß einer Ausführungsform der Erfindung ist vorgesehen, dass die Sendeeinrichtung dazu ausgebildet ist, die bereitgestellten Firmware-Daten und/oder Konfigurationsdaten an
i) ein Füllstandmessgerät; oder
ii) eine Vielzahl von Füllstandmessgeräten
per Punkt-zu-Mehrpunkt-Verbindung zu übertragen.

Ein weiterer Aspekt der Erfindung betrifft ein Messgerät, beispielsweise ein Füllstandmessgerät zur Bestimmung eines Füllstandes eines Mediums, ein Druckmessgerät, ein Grenzstandmessgerät oder ein Durchflussmessgerät, das Messgerät aufweisend eine Empfangseinrichtung, welche dazu ausgebildet ist, i) Firmware-Daten und/oder Konfigurationsdaten sowie ii) Metadaten von einer Broadcastvorrichtung nach einem der vorhergehenden Ansprüche zu empfangen.

Gemäß einer Ausführungsform der Erfindung ist vorgesehen, dass das Messgerät ferner aufweist a) einen Zwischenspeicher, welcher dazu ausgebildet ist, i) die empfangenen Firmware-Daten und/oder Konfigurationsdaten sowie ii) die empfangenen Metadaten zwischen zu speichern; und/oder b) eine Anzeigeeinheit, welcher dazu ausgebildet ist, die empfangenen Firmware-Daten und/oder Konfigurationsdaten sowie die empfangenen Metadaten anzuzeigen.

Gemäß einer Ausführungsform der Erfindung ist vorgesehen, dass die Empfangseinrichtung dazu ausgebildet ist, die i) Firmware-Daten und/oder Konfigurationsdaten sowie die ii) Metadaten von der Broadcastvorrichtung per Punkt-zu-Mehrpunkt-Verbindung zu empfangen.

Ein weiterer Aspekt der Erfindung betrifft ein Verfahren zum Übertragen von Firmware-Daten und/oder Konfigurationsdaten, wobei das Verfahren folgende Verfahrensschritte aufweist: Bereitstellen von zu übertragenden Firmware-Daten und/oder Konfigurationsdaten mit Hilfe von einer Konfigurationseinrichtung; und Übertragen der bereitgestellten Firmware-Daten und/oder Konfigurationsdaten an mindestens ein Füllstandmessgerät mit Hilfe von einer Sendeeinrichtung.

Gemäß einer Ausführungsform der Erfindung ist vorgesehen, dass das Verfahren ferner ein Bereitstellen von Metadaten in Bezug auf die zu übertragenden Firmware-Daten und/oder Konfigurationsdaten umfasst; und wobei ferner i) die Metadaten und ii) die Firmware-Daten und/oder die Konfigurationsdaten in einer Sequenz von Datenpaketen übertragen werden.

Gemäß einer Ausführungsform der Erfindung ist vorgesehen, dass bei dem Verfahren ferner mittels der bereitgestellten Metadaten die übertragenen Firmware-Daten und/oder die übertragenen Konfigurationsdaten:
i) einem Typ von Füllstandmessgeräten; oder
ii) einer Version einer Firmware für Füllstandmessgeräte; oder
iii) einem Datenübertragungsverlauf der Broadcastvorrichtung
zugeordnet werden.

Gemäß einer Ausführungsform der Erfindung ist vorgesehen, dass die bereitgestellten Firmware-Daten und/oder Konfigurationsdaten an
i) ein Füllstandmessgerät; oder
ii) eine Vielzahl von Füllstandmessgeräten
per Punkt-zu-Mehrpunkt-Verbindung übertragen werden.

Ein weiterer Aspekt der Erfindung betrifft eine Datenstruktur für die Datenübertragung zwischen einer Broadcastvorrichtung und mindestens zwei Füllstandmessgeräten per Punkt-zu-Mehrpunkt-Verbindung, wobei die Datenstruktur aufweist:
- Firmware-Daten; und/oder
- Konfigurationsdaten; und/oder
- Metadaten in Bezug auf die zu übertragenden Firmware-Daten
   und/oder Konfigurationsdaten.

Die oben und im Folgenden beschriebenen Merkmale können auch in anderen Messgeräteschaltungen umgesetzt werden. An dieser Stelle sei darauf hingewiesen, dass im Hinblick auf das Verfahren beschriebenen Merkmale von den Elementen der Messgeräteschaltungen und verschiedener Messsysteme, wie Füllstandmesssysteme, insbesondere Füllstandradarsysteme, Grenzstanderfassungssysteme, Durchflussmesssysteme oder Druckmesssysteme, implementiert werden können. Umgekehrt können die im Hinblick auf das Füllstandradar beschriebenen Merkmale als Verfahrensschritte umgesetzt werden.

Als Konfigurationsdaten oder als Firmware-Daten werden beispielsweise vorhandene Konfigurationswerte oder neue - eine aktuellere Version einer Betriebssoftware - Firmware zur Installation für die Füllstandmessgeräte übertragen.

Der Anwender kann zuvor in jedem Füllstandmessgerät einstellen, welche Daten in Form der Konfigurationsdaten oder als Firmware-Daten vom Füllstandmessgerät empfangen werden sollen - so kann beispielsweise der Empfang von Konfigurationswerten unterbunden, der Empfang von neuer Firmware jedoch erlaubt werden. Es kann vorgesehen sein, dass die Metadaten selbst nicht durch den Anwender eingestellt werden können und sie für den Nutzer nirgends sichtbar sind. Sie werden lediglich innerhalb der Kommunikation verwendet, um die aktuell übertragenen Firmware-Daten oder Konfigurationsdaten für das empfangende Füllstandmessgerät zu kennzeichnen.

Nachdem neue Daten durch das Füllstandmessgerät empfangen wurden, werden diese in einem Zwischenspeicher abgelegt. Der Anwender kann dann - z. B. mithilfe eines angeschlossenen Anzeige- und Bedienmoduls oder eines steckbaren Anzeige- und Bedienmodul bestätigen, dass die neuen Daten zur Anwendung kommen, d. h. die neue Firmware wird installiert bzw. die Konfigurationsdaten werden übernommen.

Die Broadcastvorrichtung kann dazu ausgebildet sein, dass eingestellt werden kann, welche Daten über Broadcast gesendet werden sollen. So können beispielsweise Firmwares für alle Gerätevarianten von Füllstandmessgeräten hinterlegt werden, sodass diese nach und nach an alle Füllstandmessgeräte im Sendebereich verteilt werden.

Die Broadcastvorrichtung kann optional so ausgeführt sein, dass er neue Firmwares über das Internet erhält. Ein Füllstandmessgerät kann ohne vorherige Anmeldung oder Einstellung in der Broadcastvorrichtung in den Sendebereich der Broadcastvorrichtung eingebracht werden und erhält damit automatisch auch die von diesem gesendeten Broadcast-Daten.

Wird ein Füllstandmessgerät während des Empfangs von Broadcast-Daten aus dem Sendebereich der Broadcastvorrichtung entfernt, so setzt es den Empfang automatisch an der richtigen - letztes korrekt übertragenes Datenpaket - Stelle fort, wenn es wieder in den Sendebereich der Broadcastvorrichtung eingebracht wird.

Im Folgenden werden mit Verweis auf die Figuren weitere Ausführungsformen der Erfindung beschrieben. Werden in der folgenden Figurenbeschreibung dieselben Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt eine Broadcastvorrichtung gemäß einer Ausführungsform der Erfindung.
Fig. 2 zeigt ein Füllstandmessgerät gemäß einer Ausführungsform der Erfindung.
Fig. 3 zeigt ein Flussdiagramm eines Verfahrens zum Übertragen von Firmware-Daten und/oder Konfigurationsdaten.
Fig. 4 zeigt ein Beispiel einer Datenstruktur gemäß einer Ausführungsform der Erfindung.
Fig. 5 zeigt ein Beispiel für eine Mehrpunktverbindung von einer Broadcastvorrichtung mit einer Mehrzahl von Füllstandmessgeräten gemäß einer Ausführungsform der Erfindung.

### Detaillierte Beschreibung von Ausführungsformen

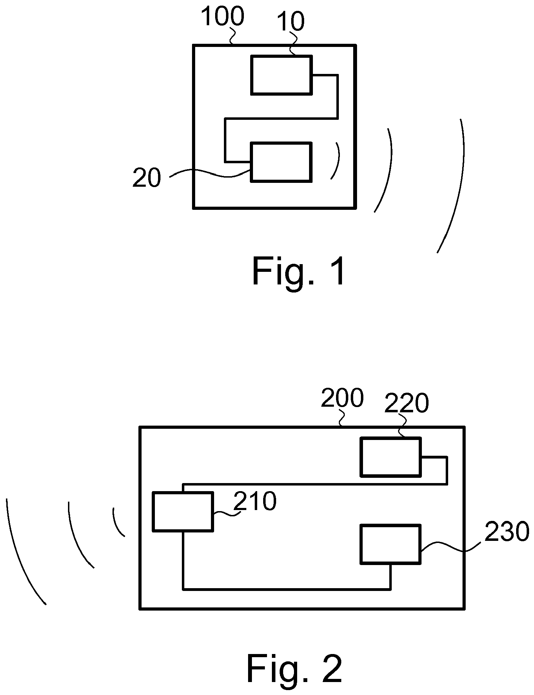

Fig. 1 zeigt eine Broadcastvorrichtung gemäß einer Ausführungsform der Erfindung.

Die Broadcastvorrichtung 100 zum Übertragen von Firmware-Daten und/oder Konfigurationsdaten umfasst eine Konfigurationseinrichtung 10 und eine Sendeeinrichtung 20.

Jedes Füllstandmessgerät verfügt über eine Broadcast-Empfangseinheit sowie einen Zwischenspeicher. Die Broadcastvorrichtung 100, auch Broadcaster genannt, enthält eine Broadcast-Sendeeinheit in Form der Sendeeinrichtung 20 sowie ein Konfigurationsmodul in Form der Konfigurationseinrichtung 10, mit dessen Hilfe die zu sendenden Daten eingestellt werden.

Der Broadcaster ist als eigenständiges Gerät ausgeführt und kann in einer Anlage zentral aufgestellt werden. Von seinem Aufstellungsort aus erreicht der Broadcaster alle oder zumindest eine Vielzahl von Füllstandmessgeräten, die sich innerhalb des Sendebereichs befinden.

In einer Ausführungsform der vorliegenden Erfindung ist vorgesehen, dass zur Identifikation der gesendeten Daten zwischen den eigentlichen Datenpaketen in regelmäßigen Intervallen Metadaten über die gerade gesendeten Daten übertragen werden. Auf diese Weise können Füllstandmessgeräte, die neu in den Sendebereich des Broadcasters eingebracht oder neu eingeschaltet werden, die gerade übertragenen Daten identifizieren und ihren Empfang synchronisieren.

Die Datenpakete des Broadcasts enthalten Mechanismen zur Sicherung der Datenintegrität, so beispielsweise Paketzähler und Prüfsummen (CRC).

Der Broadcaster kann Mechanismen zur Authentifizierung, z. B. durch ein digitales Zertifikat enthalten, so dass Empfänger sicherstellen können, dass der Broadcaster vertrauenswürdig ist.

Zur Vermeidung von Paketverlusten können alle Datenpakete optional mehrfach hintereinander gesendet werden.

Die Konfigurationseinrichtung 10 ist dazu ausgebildet, die zu übertragenden Firmware-Daten und/oder Konfigurationsdaten bereitzustellen.

Die Sendeeinrichtung 20 ist dazu ausgebildet, die bereitgestellten Firmware-Daten und/oder Konfigurationsdaten an ein Füllstandmessgerät zu übertragen.

Die zu übertragenden Firmware-Daten und/oder Konfigurationsdaten können dabei auch von einem benachbarten Füllstandmessgerät oder von einem benachbarten Sensor übertragen werden.

Fig. 2 zeigt ein Füllstandmessgerät gemäß einer Ausführungsform der Erfindung.

Das Füllstandmessgerät 200 zur Bestimmung eines Füllstandes eines Mediums umfasst eine Empfangseinrichtung 210, einen Zwischenspeicher 220, und eine Anzeigeeinheit 230.

Die Empfangseinrichtung 210 ist dazu ausgebildet, i) Firmware-Daten und/oder Konfigurationsdaten sowie ii) Metadaten von einer Broadcastvorrichtung 100 zu empfangen.

Der Zwischenspeicher 220 ist dazu ausgebildet, i) die empfangenen Firmware-Daten und/oder Konfigurationsdaten sowie ii) die empfangenen Metadaten zwischen zu speichern

Die Anzeigeeinheit 230 ist dazu ausgebildet, die empfangenen Firmware-Daten und/oder Konfigurationsdaten sowie die empfangenen Metadaten anzuzeigen.

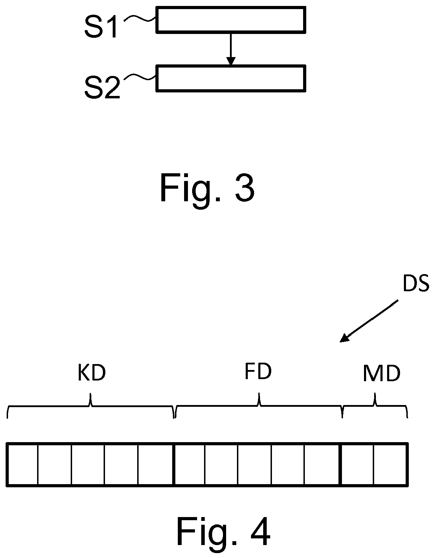

Fig. 3 zeigt ein Flussdiagramm eines Verfahrens zum Übertragen von Firmware-Daten und/oder Konfigurationsdaten.

Das Verfahren zum Übertragen von Firmware-Daten und/oder Konfigurationsdaten weist folgende Verfahrensschritte auf:
Als ein erster Schritt des Verfahrens erfolgt ein Bereitzustellen S1 von zu übertragenden Firmware-Daten und/oder Konfigurationsdaten mit Hilfe von einer Konfigurationseinrichtung 10.

Als ein zweiter Schritt des Verfahrens erfolgt ein Übertragen S2 der bereitgestellten Firmware-Daten und/oder Konfigurationsdaten an mindestens ein Füllstandmessgerät mit Hilfe von einer Sendeeinrichtung 20.

Die Fig. 4 zeigt ein Beispiel einer Datenstruktur gemäß einer Ausführungsform der Erfindung.

Eine Datenstruktur DS umfasst Firmware-Daten FD; und/oder Konfigurationsdaten KD.

Ferner umfasst die Datenstruktur DS Metadaten MD in Bezug auf die zu übertragenden Firmware-Daten FD und/oder Konfigurationsdaten KD.

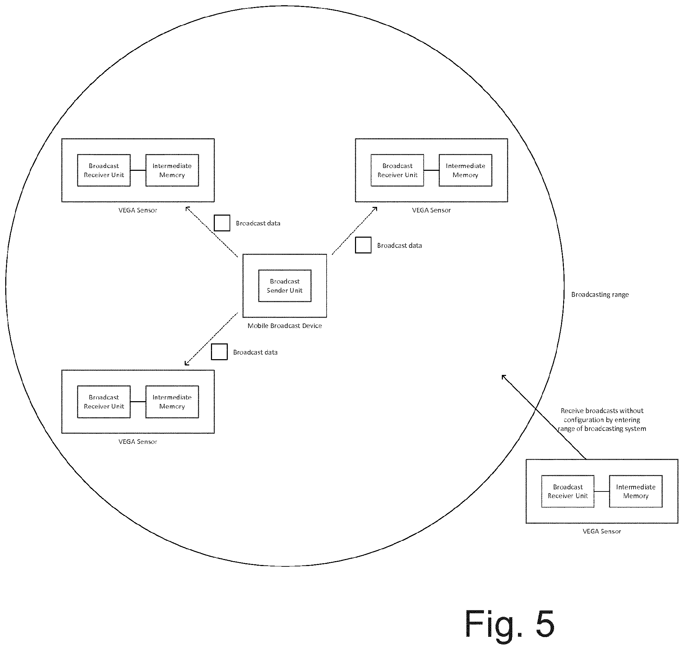

Die Fig. 5 zeigt ein Beispiel für eine Mehrpunktverbindung von einer Broadcastvorrichtung mit einer Mehrzahl von Füllstandmessgeräten gemäß einer Ausführungsform der Erfindung.

Dabei können unterschiedliche Szenarien auftreten wie im Folgenden beschrieben.

Es befindet sich ein Broadcaster in Form einer Broadcastvorrichtung 100 in der Anlage; drei Füllstandmessgeräte der Variante A und ein Füllstandmessgerät einer anderen Variante B befinden innerhalb des Sendbereichs.

Der Broadcaster in Form der Broadcastvorrichtung 100 ist derart konfiguriert, dass er zyklisch Firmwares für Füllstandmessgeräte der Varianten A, B und C sendet.

Der Broadcaster in Form der Broadcastvorrichtung 100 sendet gerade die ersten Pakete der Firmware für Füllstandmessgeräte der Variante A.

Das erste Füllstandmessgerät der Variante A erhält diese ersten Pakete und stellt anhand von Metadaten innerhalb der Daten fest, dass diese Version der Firmware bereits installiert ist. Es ignoriert daraufhin alle folgenden Pakete, die eine Firmware mit dieser Version enthalten.

Das zweite Füllstandmessgerät der Variante A erhält ebenfalls diese ersten Pakete, ist allerdings durch den Anwender so konfiguriert, dass keine neue Firmware empfangen werden darf. Es ignoriert daraufhin alle folgenden Pakete, die eine Firmware enthalten.

Das dritte Füllstandmessgerät der Variante A erhält ebenfalls diese ersten Pakete und stellt anhand von Metadaten innerhalb der Daten fest, dass diese Pakete bereits zu einem früheren Zeitpunkt empfangen worden sind. Es wartet daraufhin ab, bis es Pakete empfängt, die es zuvor noch nicht erhalten hat und setzt das Zwischenspeichern der Firmware an der passenden Stelle fort.

Das Füllstandmessgerät der Variante B empfängt diese ersten Pakete und stellt anhand von Metadaten innerhalb der Daten fest, dass die übertragene Firmware nicht zur eigenen Variante passt. Es ignoriert daraufhin alle folgenden Pakete, die diese Firmware enthalten.

Nun wird ein neues Füllstandmessgerät der Variante C in Betrieb genommen. Der Anwender stellt ein, dass neue Firmware über Broadcasting erhalten werden darf.

Daraufhin beginnt das Füllstandmessgerät mit der Analyse der gerade übertragenen Broadcast-Daten und stellt fest, dass Firmware für eine unpassende Variante gesendet wird. Es ignoriert daraufhin alle folgenden Pakete, die eine unpassende Firmware enthalten.

Nach einiger Zeit sendet der Broadcaster eine neue Firmware für Füllstandmessgeräte der Varianten C. Das Füllstandmessgerät der Variante C empfängt diese vollständig.

Nach der erfolgreichen Prüfung der Daten auf Integrität wird die neue Firmware im Zwischenspeicher als gültig markiert. Der Anwender erhält eine Information auf der Anzeige- und Bedieneinheit des Füllstandmessgeräts angezeigt und kann der Installation der neuen Firmware zum gewünschten Zeitpunkt zustimmen oder sie verwerfen.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Broadcastvorrichtung (100) zum Übertragen von Firmware-Daten und/oder Konfigurationsdaten, wobei die Broadcastvorrichtung (100) umfasst:
- eine Konfigurationseinrichtung (10), welche dazu ausgebildet ist, die zu übertragenden Firmware-Daten und/oder Konfigurationsdaten bereitzustellen; und
- eine Sendeeinrichtung (20), welche dazu ausgebildet ist, die bereitgestellten Firmware-Daten und/oder Konfigurationsdaten an ein Füllstandmessgerät (200) zu übertragen,
wobei die Konfigurationseinrichtung (10) ferner dazu ausgebildet ist, Metadaten in Bezug auf die zu übertragenden Firmware-Daten und/oder Konfigurationsdaten bereitzustellen; und
wobei die Sendeeinrichtung (20) dazu ausgebildet ist, die i) Metadaten und ii) die Firmware-Daten und/oder die Konfigurationsdaten in einer Sequenz von Datenpaketen zu übertragen.

2. Broadcastvorrichtung (100) nach Anspruch 1,
wobei die Konfigurationseinrichtung (10) ferner dazu ausgebildet ist, durch die bereitgestellten Metadaten die übertragenen Firmware-Daten und/oder die übertragenen Konfigurationsdaten:
i) einem Typ von Füllstandmessgeräten; oder
ii) einer Version einer Firmware für Füllstandmessgeräte; oder
iii) einem Datenübertragungsverlauf der Broadcastvorrichtung zu zuordnen.

3. Broadcastvorrichtung (100) nach einem der vorhergehenden Ansprüche, wobei die Sendeeinrichtung (20) dazu ausgebildet ist, ferner:
i) einen Paketzähler; und/oder
ii) eine Prüfsumme; und/oder
iii) ein digitales Zertifikat; und/oder
iv) Daten zur Prüfung einer Authentizität der Broadcastvorrichtung
zu übertragen.

4. Broadcastvorrichtung (100) nach einem der vorhergehenden Ansprüche, wobei die Sendeeinrichtung (20) dazu ausgebildet ist, die i) Metadaten und ii) die Firmware-Daten und/oder die Konfigurationsdaten per:
i) lokalem Funknetz; und/oder
ii) Wireless Personal Area Network (WPAN); und/oder
iii) Wireless Local Area Network (WLAN); und/oder
iv) Bluetooth; und/oder
v) WirelessHart; und/oder
vi) Long Range Wide Area Network (LoRaWAN); und/oder
iv) Wifibroadcast
zu übertragen.

5. Broadcastvorrichtung (100) nach einem der vorhergehenden Ansprüche, wobei die Sendeeinrichtung (20) dazu ausgebildet ist, die bereitgestellten Firmware-Daten und/oder Konfigurationsdaten an
i) ein Füllstandmessgerät; oder
ii) eine Vielzahl von Füllstandmessgeräten
per Punkt-zu-Mehrpunkt-Verbindung zu übertragen.

6. Broadcastvorrichtung nach einem der vorhergehenden Ansprüche,
wobei die Sendeeinrichtung (20) dazu ausgebildet ist, die bereitgestellten Firmware-Daten und/oder Konfigurationsdaten mit einer zyklischen Wiederholung zu übertragen.

7. Füllstandmessgerät (200) zur Bestimmung eines Füllstandes eines Mediums, das Füllstandmessgerät (200) aufweisend:
- eine Empfangseinrichtung (210), welche dazu ausgebildet ist, i) Firmware-Daten und/oder Konfigurationsdaten sowie ii) Metadaten von einer Broadcastvorrichtung (100) nach einem der vorhergehenden Ansprüche zu empfangen.

8. Füllstandmessgerät (200) nach Anspruch 7,
wobei das Füllstandmessgerät (200) ferner aufweist:
- einen Zwischenspeicher (220), welcher dazu ausgebildet ist, i) die empfangenen Firmware-Daten und/oder Konfigurationsdaten sowie ii) die empfangenen Metadaten zwischen zu speichern; und/oder.
- eine Anzeigeeinheit (230), welcher dazu ausgebildet ist, die empfangenen Firmware-Daten und/oder Konfigurationsdaten sowie die empfangenen Metadaten anzuzeigen.

9. Füllstandmessgerät (200) nach Anspruch 7 oder 8,
wobei die Empfangseinrichtung (210) dazu ausgebildet ist, die i) Firmware-Daten und/oder Konfigurationsdaten sowie die ii) Metadaten von der Broadcastvorrichtung (100) per Punkt-zu-Mehrpunkt-Verbindung zu empfangen.

10. Verfahren zum Übertragen von Firmware-Daten und/oder Konfigurationsdaten, wobei das Verfahren folgende Verfahrensschritte aufweist:
- Bereitzustellen (S1) von zu übertragenden Firmware-Daten und/oder Konfigurationsdaten mit Hilfe von einer Konfigurationseinrichtung (10); und
- Übertragen (S2) der bereitgestellten Firmware-Daten und/oder Konfigurationsdaten an mindestens ein Füllstandmessgerät mit Hilfe von einer Sendeeinrichtung (20).

11. Verfahren nach Anspruch 10,
wobei ferner ein Bereitstellen von Metadaten in Bezug auf die zu übertragenden Firmware-Daten und/oder Konfigurationsdaten erfolgt; und
wobei ferner i) die Metadaten und ii) die Firmware-Daten und/oder die Konfigurationsdaten in einer Sequenz von Datenpaketen übertragen werden.

12. Verfahren nach Anspruch 11,
wobei mittels der bereitgestellten Metadaten die übertragenen Firmware-Daten und/oder die übertragenen Konfigurationsdaten:
i) einem Typ von Füllstandmessgeräten; oder
ii) einer Version einer Firmware für Füllstandmessgeräte; oder
iii) einem Datenübertragungsverlauf der Broadcastvorrichtung
zugeordnet werden.

13. Verfahren nach einem der vorhergehenden Ansprüche 10 bis 12, wobei die bereitgestellten Firmware-Daten und/oder Konfigurationsdaten an
i) ein Füllstandmessgerät; oder
ii) eine Vielzahl von Füllstandmessgeräten
per Punkt-zu-Mehrpunkt-Verbindung übertragen werden.

14. Datenstruktur für die Datenübertragung zwischen einer Broadcastvorrichtung nach einem der vorhergehenden Ansprüche und mindestens zwei Füllstandmessgeräten nach einem der vorhergehenden Ansprüche 7 bis 9 per Punkt-zu-Mehrpunkt-Verbindung, wobei die Datenstruktur aufweist:
- Firmware-Daten; und/oder
- Konfigurationsdaten; und/oder
- Metadaten in Bezug auf die zu übertragenden Firmware-Daten
und/oder Konfigurationsdaten.

## Geänderte Patentansprüche

### Geänderte Patentansprüche gemäss Regel 137(2) EPÜ.

1. Broadcastvorrichtung (100) zum Übertragen von Firmware-Daten und/oder Konfigurationsdaten, wobei die Broadcastvorrichtung (100) umfasst:
- eine Konfigurationseinrichtung (10), welche dazu ausgebildet ist, die zu übertragenden Firmware-Daten und/oder Konfigurationsdaten bereitzustellen; und
- eine Sendeeinrichtung (20), welche dazu ausgebildet ist, die bereitgestellten Firmware-Daten und/oder Konfigurationsdaten an ein Füllstandmessgerät (200) zu übertragen,
wobei die Konfigurationseinrichtung (10) ferner dazu ausgebildet ist, Metadaten in Bezug auf die zu übertragenden Firmware-Daten und/oder Konfigurationsdaten bereitzustellen; und
wobei die Sendeeinrichtung (20) dazu ausgebildet ist, die i) Metadaten und ii) die Firmware-Daten und/oder die Konfigurationsdaten in einer Sequenz von Datenpaketen zu übertragen.

2. Broadcastvorrichtung (100) nach Anspruch 1,
wobei die Konfigurationseinrichtung (10) ferner dazu ausgebildet ist, durch die bereitgestellten Metadaten die übertragenen Firmware-Daten und/oder die übertragenen Konfigurationsdaten:
i) einem Typ von Füllstandmessgeräten; oder
ii) einer Version einer Firmware für Füllstandmessgeräte; oder
iii) einem Datenübertragungsverlauf der Broadcastvorrichtung zu zuordnen.

3. Broadcastvorrichtung (100) nach einem der vorhergehenden Ansprüche, wobei die Sendeeinrichtung (20) dazu ausgebildet ist, ferner:
i) einen Paketzähler; und/oder
ii) eine Prüfsumme; und/oder
iii) ein digitales Zertifikat; und/oder
iv) Daten zur Prüfung einer Authentizität der Broadcastvorrichtung
zu übertragen.

4. Broadcastvorrichtung (100) nach einem der vorhergehenden Ansprüche, wobei die Sendeeinrichtung (20) dazu ausgebildet ist, die i) Metadaten und ii) die Firmware-Daten und/oder die Konfigurationsdaten per:
i) lokalem Funknetz; und/oder
ii) Wireless Personal Area Network (WPAN); und/oder
iii) Wireless Local Area Network (WLAN); und/oder
iv) Bluetooth; und/oder
v) WirelessHart; und/oder
vi) Long Range Wide Area Network (LoRaWAN); und/oder
iv) Wifibroadcast
zu übertragen.

5. Broadcastvorrichtung (100) nach einem der vorhergehenden Ansprüche, wobei die Sendeeinrichtung (20) dazu ausgebildet ist, die bereitgestellten Firmware-Daten und/oder Konfigurationsdaten an
i) ein Füllstandmessgerät; oder
ii) eine Vielzahl von Füllstandmessgeräten
per Punkt-zu-Mehrpunkt-Verbindung zu übertragen.

6. Broadcastvorrichtung nach einem der vorhergehenden Ansprüche,
wobei die Sendeeinrichtung (20) dazu ausgebildet ist, die bereitgestellten Firmware-Daten und/oder Konfigurationsdaten mit einer zyklischen Wiederholung zu übertragen.

7. Füllstandmessgerät (200) zur Bestimmung eines Füllstandes eines Mediums, das Füllstandmessgerät (200) aufweisend:
- eine Empfangseinrichtung (210), welche dazu ausgebildet ist, i) Firmware-Daten und/oder Konfigurationsdaten sowie ii) Metadaten von einer Broadcastvorrichtung (100) nach einem der vorhergehenden Ansprüche zu empfangen.

8. Füllstandmessgerät (200) nach Anspruch 7,
wobei das Füllstandmessgerät (200) ferner aufweist:
- einen Zwischenspeicher (220), welcher dazu ausgebildet ist, i) die empfangenen Firmware-Daten und/oder Konfigurationsdaten sowie ii) die empfangenen Metadaten zwischen zu speichern; und/oder.
- eine Anzeigeeinheit (230), welcher dazu ausgebildet ist, die empfangenen Firmware-Daten und/oder Konfigurationsdaten sowie die empfangenen Metadaten anzuzeigen.

9. Füllstandmessgerät (200) nach Anspruch 7 oder 8,
wobei die Empfangseinrichtung (210) dazu ausgebildet ist, die i) Firmware-Daten und/oder Konfigurationsdaten sowie die ii) Metadaten von der Broadcastvorrichtung (100) per Punkt-zu-Mehrpunkt-Verbindung zu empfangen.

10. Verfahren zum Übertragen von Firmware-Daten und/oder Konfigurationsdaten, wobei das Verfahren folgende Verfahrensschritte aufweist:
- Bereitzustellen (S1) von zu übertragenden Firmware-Daten und/oder Konfigurationsdaten mit Hilfe von einer Konfigurationseinrichtung (10); und
Übertragen (S2) der bereitgestellten Firmware-Daten und/oder Konfigurationsdaten an mindestens ein Füllstandmessgerät mit Hilfe von einer Sendeeinrichtung (20),
wobei ferner ein Bereitstellen von Metadaten in Bezug auf die zu übertragenden Firmware-Daten und/oder Konfigurationsdaten erfolgt; und
- wobei ferner i) die Metadaten und ii) die Firmware-Daten und/oder die Konfigurationsdaten in einer Sequenz von Datenpaketen übertragen werden.

11. Verfahren nach Anspruch 10,
wobei mittels der bereitgestellten Metadaten die übertragenen Firmware-Daten und/oder die übertragenen Konfigurationsdaten:
i) einem Typ von Füllstandmessgeräten; oder
ii) einer Version einer Firmware für Füllstandmessgeräte; oder
iii) einem Datenübertragungsverlauf der Broadcastvorrichtung
zugeordnet werden.

12. Verfahren nach einem der vorhergehenden Ansprüche 10 bis 11, wobei die bereitgestellten Firmware-Daten und/oder Konfigurationsdaten an
i) ein Füllstandmessgerät; oder
ii) eine Vielzahl von Füllstandmessgeräten
per Punkt-zu-Mehrpunkt-Verbindung übertragen werden.

13. Datenstruktur für die Datenübertragung zwischen einer Broadcastvorrichtung nach einem der vorhergehenden Ansprüche 1 bis 6 und mindestens zwei Füllstandmessgeräten nach einem der vorhergehenden Ansprüche 7 bis 9 per Punkt-zu-Mehrpunkt-Verbindung, wobei die Datenstruktur aufweist:
- Firmware-Daten; und/oder
- Konfigurationsdaten; und/oder
- Metadaten in Bezug auf die zu übertragenden Firmware-Daten
und/oder Konfigurationsdaten.
